# EUROPEAN PATENT SPECIFICATION

(11) **EP 4 122 305 B1**
(45) Date of publication and mention of the grant of the patent: **25.03.2026**
(21) Application number: 22185414.4
(22) Date of filing: 18.07.2022
(51) Int. Cl.: A01B 69/00, A01B 69/04

(54) **METHOD FOR IDENTIFYING A TRAJECTORY IN A PLANTATION OF FRUIT TREES SUCH AS ORANGE GROVES**
VERFAHREN ZUR IDENTIFIZIERUNG EINER TRAJEKTORIE IN EINER OBSTBAUMPLANTAGE WIE Z. B. EINER ORANGENPLANTAGE
PROCÉDÉ D'IDENTIFICATION D'UNE TRAJECTOIRE DANS UNE PLANTATION D'ARBRES FRUITIERS, TELLES QUE DES ORANGERAIES

(30) Priority: 23.07.2021 IT 202100019664
(43) Date of publication of application: 25.01.2023
(73) Proprietor: CNH Industrial Italia S.p.A., 10156 Torino (IT)
(72) Inventor: DI CECILIA, Luca, 41123 Modena (IT); FERRARI, Luca, 41043 Formigine (Modena) (IT)
(74) Representative: CNH Industrial IP Department

(56) References cited:
- WO-A1-2021/123415
- US-A1- 2017 131 718
- US-A1- 2021 000 006
- US-A1- 2021 186 006
- US-B2- 10 721 859

## Description

### Field of the invention

The present invention refers to the field of autonomous driving in agriculture.

### State of the art

Mechanical harvesting of oranges and similar plantations (e.g. coffee, grapes, almonds, olives) is not an easy task, as the orange picker can damage trees by breaking their branches.

US2021/186006A1 show a solution to facilitate such a task.

The present applicant has developed a four-wheeled vehicle in the form of a portal adapted to move by passing over the tree rows. In particular, during operation, two wheels W are arranged on one side of the row of crops and a further two wheels are arranged one on the opposite side of the same row of crops, with a sort of bridge connecting all the wheels, so that the vehicle defines a central tunnel capable of passing on the row.

Hydraulic motors are designed to drive each wheel in such a way that no drive shaft is implemented, which could physically interfere with the crop row.

Two substantially vertical rotors R are arranged in such a way as to harvest the crop row on both its opposite sides, while the vehicle moves on the crop row itself.

The rotors are able to rotate/vibrate at different RPMs in order to detach the fruits, for example oranges, from the branches of the tree alignment.

Normally, the driver's cab is arranged on one side of the vehicle in such a way that it remains low enough for the driver to easily reach it. Due to the mismatch between the cockpit position and the vehicle's centerline, the driver does not have an optimal point of view to perfectly match the vehicle's centerline on the row alignment.

One of the most common damage caused to trees is the breaking of the trunk and thick branches, due to the movement of the two rotors. This can lead the trees to develop diseases, which can even lead to the plant's death. Often damages happen due to vehicle misalignment, due to the too short distance between one of the machine rotors and one side of the row of trees.

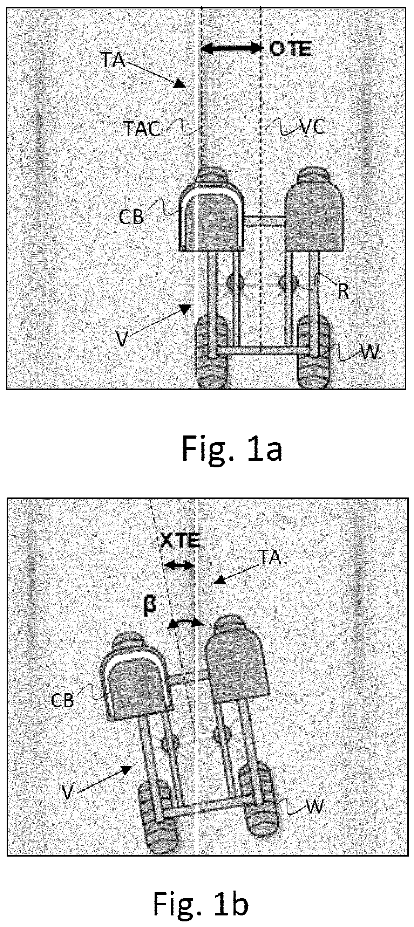

Figure 1a describes a common situation, where the vehicle centerline VC has a lateral misalignment OTE (Side Offset Error) from the row alignment centerline TAC.

In other words, the vehicle axis VC and the alignment axis TAC of the row are parallel to each other but with a lateral offset.

Figure 1b describes a different situation where the vehicle has an angular misalignment, i.e. an angular misalignment error XTE, which means that the centerline of the vehicle VC and the centerline of row alignment TAC are not parallel and define an angle β of incidence.

Nowadays, there is a growing need for agricultural machinery capable of autonomous operations, due to the lack of skilled persons capable of handling such agricultural vehicles.

The applicant has identified an innovative method and system to identify the correct trajectory, appropriately correcting that of the vehicle.

The correct trajectory is hereinafter referred to as the "trajectory to follow".

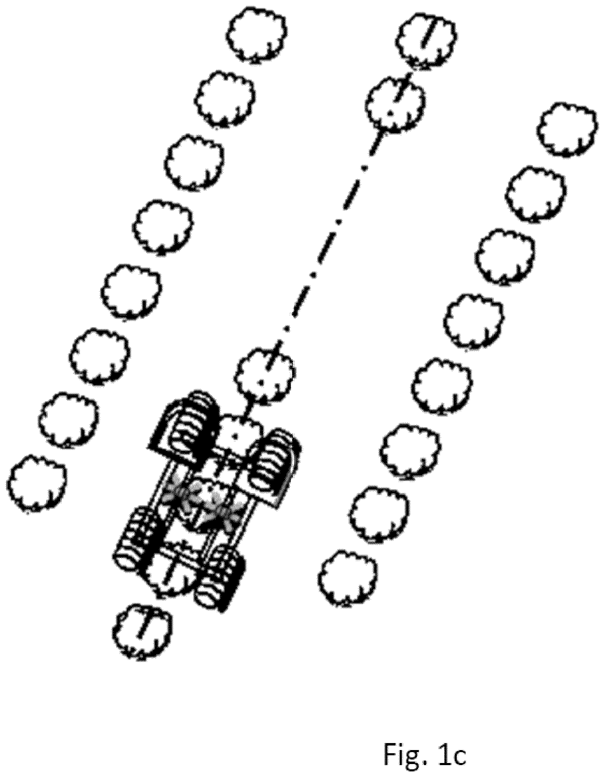

However, there are conditions in which, the system lead to stop due to the lack of some trees or because they have been replaced with young plants and therefore much smaller than the other ones. Figure 1c shows a similar situation, in which the vehicle moves along an incomplete row.

A similar situation can occur when a tree in the same row is not well aligned.

In fact, when one or more trees die or are replaced by young plants, the system faces a significant variation of the scenario that lies ahead, with the risk of compromising the calculation of the lateral and/or angular misalignment of the vehicle with respect to the alignment of plants that the vehicle has to work.

### Summary of the invention

The main purpose of the present invention is to provide a solution to allow the autonomous driving system to proceed even when it is not possible to recognize one or more plants of the row being processed in the 2D image obtained from the 3D sensor.

According to the present invention, a 3D sensor is used to acquire the field in front of the vehicle, in order to recognize the alignment of the canopy of the trees.

The 3D sensors could be a LiDAR, a stereo camera (VIS, NIR, SWIR, LWIR), a RADAR, an ultrasonic sensor array or any 3D sensor or sensor set in general, capable of producing a so-called 3D point cloud. A multi-layer 3D point cloud sensor is preferably implemented.

The 3D sensors are able to allow the acquisition of a so-called "point cloud" of the scene in front, where each point represents a point where the light (laser in the case of LiDAR) is reflected by a part of an object in the scene (e.g. a leaf, a rock, a branch). The better the sensor resolution, the more layers the 3DS can pick up. This leads to a denser and richer point cloud that is available for post-processing.

According to the invention, the point cloud is sectioned according to at least one transversal layer with respect to the vehicle axis and analyzed to recognize the crown of the tree alignment to be worked.

The vehicle axis coincides with the longitudinal development axis of the vehicle.

The sectioning returns a slice of the point cloud, arranged perpendicular to the vehicle axis.

For convenience, this slice is referred to as an "image" or "2D image".

It should be understood that a combination of one of these sensors with a 2D camera (VIS, NIR, SWIR, LWIR) is also possible, in order to enhance the 3D point cloud with a visual image that can be analyzed using standard images processing techniques.

The 3D sensor is placed in a fixed and known position on the vehicle roof, preferably in the front part and with the acquisition axis superimposed on the vehicle axis, which is arranged in the middle between the right and left wheels. According to the present invention, a windowing of the 2D image is performed, so as to exclude a right region and a left region. Therefore, a central region that has an approximately rectangular shape is saved.

In the central region, the points that fall inside are analyzed and if at least one of the following conditions occurs:
- The number of points is less than a first predetermined threshold and/or
- The barycentric point of the points is below a predetermined ordinate (height),
then the central region is enlarged and the meeting of the previous conditions is checked again. The cycle stops when a predetermined ratio is reached between the central region and the entire slice. Upon reaching said predetermined ratio, then it is assumed that at least one plant is missing and therefore at least one of the fallback procedures described below is carried out. Otherwise, if at least one of the above conditions is verified, then it proceeds with a procedure for identifying the trajectory to follow, based on a plant recognition. According to a preferred method for identifying the trajectory to be followed, the cross section of a fruit tree can be approximated with a pseudo-ellipsoid. In fact, the height of the tree and its width are more or less comparable, and this hypothesis can be exploited to estimate the position of the peak, corresponding to the position of the trunk. The peak corresponds to the point having higher ordinate (or height) in the fitting curve.

According to the present description, with "pseudo-ellipsoid" it is meant an ellipsoid, a circumference, a catenary, a Gaussian, a polynomial. It should be considered that two-dimensional maps can be stretched or manipulated, so that the crown of the tree changes from an ellipsoidal shape to an almost circular shape and vice versa.

According to this preferred method of the invention, the best fitting curve of the points that fall in the central region of the 2D image is sought.

When the fitting is considered acceptable, through a fitting quality index, the fitting curve is acquired and its maximum point, according to the ordinate axis, is recognized as the center of the row line, which indicates the peak of the trees and the relative position of the trunks.

Conversely, when the fitting quality index is below a predetermined threshold, then, as described above, the method proceeds, as described above, to recursively enlarge the central region up to the aforementioned predetermined ratio, in an attempt to obtain a quality index that equals or exceeds said threshold. Once the aforementioned predetermined ratio has been reached, as described above, it is assumed that at least one plant is missing and therefore at least one of the fallback procedures described below is performed. Otherwise, the method proceeds with the method of identifying the trajectory to follow, based on the recognition of the plant in the central region of the 2D image.

In other words, as long as it is possible to recognize a plant in the 2D image obtained from the point cloud, then the method proceed with a procedure for identifying the trajectory based on the image itself, vice versa, when it is not possible to recognize the plant in the 2D image then at least one fallback procedure is used.

Advantageously, human intervention is limited to the minimum possible.

Preferably, human intervention is required when it is not possible to recognize a plant for a predetermined time interval or for a predetermined distance travelled by the vehicle.

According to the preferred method for recognizing the trajectory to be followed, the lateral misalignment is calculated as the difference between the longitudinal axis of the vehicle and the center of the detected crop row, which corresponds to the maximum point of the fitting curve, preferably expressed in metric form.

Preferably, the process is iterated for a certain number of transversal slices, at least two, and for each 2D image, the lateral misalignment values are calculated. Then the mismatch values for each transverse slice are used to perform a correction of the vehicle's advancement.

According to a preferred embodiment of the invention, the angular misalignment error β (XTE) is also identified. This error is identified using two transversal slices at known and different distances from each other and calculating the arctan (ε/dist) where ε is the algebraic difference of the lateral misalignment OTE and dist is the distance between the slices.

Regarding the situation of non-recognition of a plant in the 2D image, one or more of the following fallback procedures can be used:
according to a first fallback procedure, the vehicle positions obtained by means of a GPS positioning system are continuously sampled and, when it is not possible to recognize a plant, on the basis of some of the last positions of the vehicle an interpolating line is calculated which is assumed as the trajectory to follow until it is again possible to recognize a plant in a 2D image;
according to a second fallback procedure, some of the last lateral OTE and angular XTE misalignments are considered and the respective OTEm and XTEm averages are calculated, which are used to control the progress of the vehicle; this is possible in consideration of the fact that the vehicle moves very slowly; preferably, the averages are weighted, giving lower weight to values calculated further back in time.

It is worth highlighting that further fallback procedures can be identified and that according to a preferred variant of the invention, the two fallback procedures described here can be combined with each other by identifying for example a median trajectory between the trajectories that are calculated by means of the two fallback procedures. By "worked row" it is meant the row collected by the vehicle.

According to a preferred embodiment of the invention, the steering is controlled in such a way that the current direction of the vehicle is superimposed on that of the row as calculated by the method of recognizing plants in 2D images or, alternatively, according to one or more fallback procedures, when the plants recognition is not possible.

These and other objects are achieved by means of the attached claims, which describe preferred embodiments of the invention, forming an integral part of the present description.

### Brief description of the figures

The invention will be fully clear from the following detailed description, given as a mere example and not of limitation, to be read with reference to the attached drawing figures, in which:
- Fig. 1a and 1b show two possible situations of misalignment between the agricultural vehicle and a row of fruit trees;
- Fig. 1c shows a situation in which the worked row is formed by a discontinuous alignment of plants;
- Fig. 2 shows a side view of an agricultural vehicle modified according to the present invention;
- Fig. 3 shows a 2D image obtained as a slice of the point clouds scanned by a 3D sensor arranged on the vehicle;
- Figs. 4a, 4b and 4c show 2D images with windows according to three distinct possible situations;
- Fig. 5 shows an example of a flow chart of the method object of the present invention;
- Fig. 6 shows a further example of flow diagram of the method object of the present invention;
- Fig. 7 illustrates another implementation of the present invention considering two (or more) transversal slices H1, H2; and Fig. 7bis describes a more general case
for constructing a geometric formula for calculating an angular misalignment XTE.

The same reference numbers and letters in the figures designate identical or functionally equivalent parts or functions.

According to the present invention, the term "second element" does not imply the presence of a "first element", first, second, etc. They are used only to improve the clarity of the description and should not be interpreted in a limiting way.

### Detailed description of preferred variants of the invention

The present invention proposes a self-alignment algorithm of an agricultural vehicle, in particular of the type suitable for passing on a row of trees described above. Therefore, the vehicle is shaped as described above, with two rotors R arranged to shake the branches on both sides of the same row of trees, while the vehicle moves along the crop row.

According to the invention, a 3D sensor is arranged on the top and front of the vehicle to scan the environment in front of the vehicle.

Preferably, but not necessarily, the 3D sensor is arranged on the vehicle axis and aligned with it to obtain a point cloud of the environment in front of the vehicle.

In any case, the sensor axis is at least parallel to the central axis of the vehicle to observe the scenario in front of the vehicle.

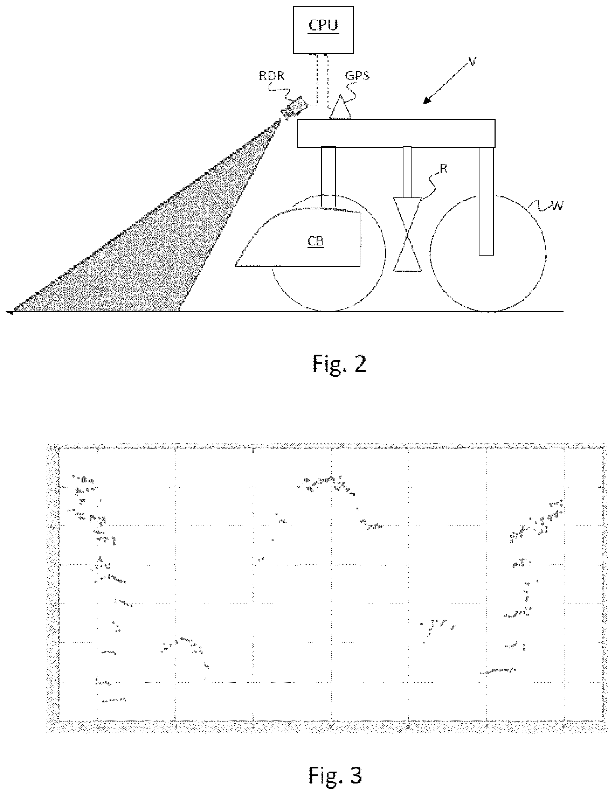

The point cloud of Figure 3 is the output of a single layer scan of a LiDAR, which is usually multilayered, projected onto said transverse plane. In the following, this layer represents the slice obtained at a predetermined distance from the vehicle, perpendicular to the vehicle axis and indicated as a 2D image.

It should be understood that the terms "layer", "slice" and 2D image are used interchangeably.

According to the present invention, the identification of the correct trajectory of the vehicle is carried out by identifying the row axis TAC of a plantation to be worked by means of the 3D sensor 3DS interfaced with the CPU processing means of an agricultural vehicle.

However, when it is not possible to recognize the axis row, at least one fallback procedure is carried out.

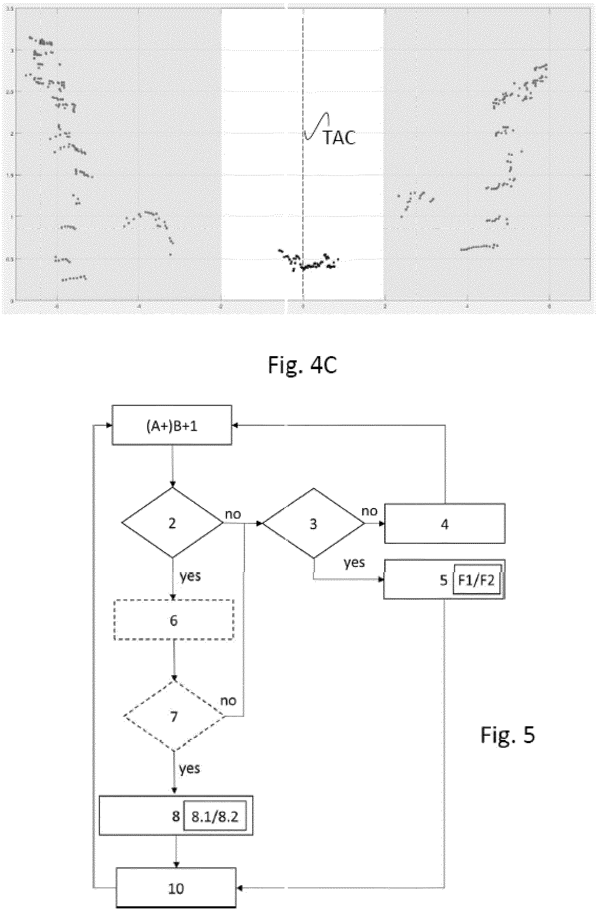

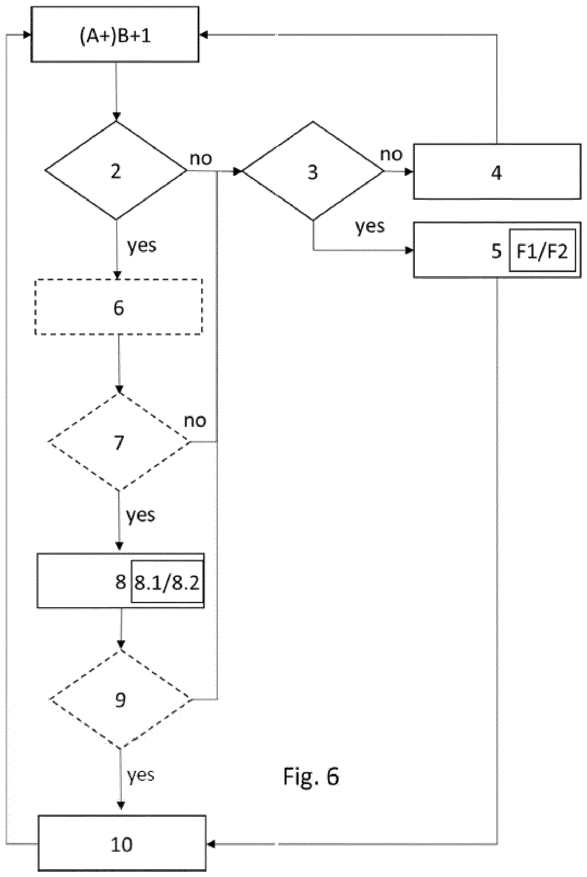

Figures 5 and 6 show examples of implementations of the method object of the present invention.

With reference to Figure 5, some characteristic steps of the present method are described. The blocks represented in hatched are not essential:
- Step 1: windowing of a previously acquired 2D image, in order to mask a right region and a left region, thus leaving unchanged a central region of the 2D image, for this purpose we can refer to a "central region" taking into account the central windowing operation;
- Step 2: check for the presence of a plant in the central region, if the plant is not recognized (2 = no), then
- Step 3: check about the dimensions of the central region, if these do not exceed a predetermined ratio with respect to the overall 2D image (3 = no), then
- Step 4: enlarge the central region and return to step 1, otherwise (3 = yes)
- Step 5: execution of a fallback procedure for the calculation of a trajectory to follow;
   if instead the verification (Step 2) about the presence of a plant in the central region is positive (2 = yes) then
- Step 8: execution of a procedure for calculating the trajectory to follow, based on a plant recognition in the 2D image.

According to the present invention, the expression "if these do not exceed a predetermined ratio with respect to the overall 2D image" means that the central region is limited up to a predetermined threshold, avoiding that the central window is equal to the entire 2D image. This implies that the ratio between the central region and the entire 2D image is strictly less than 1.

Figure 5 also proposes two optional steps, namely steps 6 and 7 interposed between step 2 (2 = yes) and step 8:
If instead the verification (Step 2) about the presence of a plant in the central region is positive (2 = yes) then
- Step 6: fitting the points in the central region with a pseudo-ellipsoid,
- Step 7: verification of the goodness of the fitting, if a fitting quality index is higher than a predetermined threshold (7 = yes) go to step 8, otherwise go to step 3 described above.

The diagram ends with the execution of the
- Step 10: Controlling the vehicle autonomous driving systems based on the calculated trajectory.

Step 10 can be reached from either step 5 or step 8.

It is worth noting that the flow chart repeats cyclically in order to guide the vehicle as it moves along the row of plants.

Figure 6 is essentially based on Figure 5 from which it differs in that it carries out a further check, al
- Step 9: checking that the calculated lateral and/or angular misalignment is lower than a predetermined threshold, in positive case (9 = yes) step 10 is performed, otherwise (9 = no) go to step 3.

Step 9 is interposed between step 8 and step 10.

Before the steps described above, the following steps are performed:
- (Step A) acquisition of a 3D point cloud from said 3D sensor corresponding to the reflections detected by said 3D sensor (3DS) from a scenario in front of vehicle V,
- (Step B) processing of said 3D point cloud to obtain a 2D image as a slice of the point cloud according to a cutting plane of the 3D point cloud, transversal to the vehicle axis at a first predetermined distance H1 from the front portion of the vehicle.

According to a preferred variant of the invention, the method for identifying the trajectory to be followed is based on the recognition of a plant contained in the image comprising (Step 8.1) identification of a first peak (PK1) associated with said interpolating pseudo-elliptical curve of the Step 6 on a first 2D image at a first distance H1 and calculation of a first lateral OTE misalignment between said first peak PK1 and a central vertical line of the 2D map corresponding to the vehicle axis (VC).

According to a preferred variant of the method for identifying the trajectory to follow based on the identification of a plant of the row to be worked, the method comprises (Step 8.2) identification of a second PK2 peak associated with a second pseudo-elliptic curve interpolating the points of a second 2D image arranged at the distance H2 from the vehicle and calculation of a second OTE misalignment between said second PK2 peak and the vertical line of the 2D image corresponding to the center line of the vehicle VC.

Thanks to the knowledge of at least two PK1 and PK2 peaks, it is possible to calculate the angular misalignment (XTE) as arctan (ε/dist) where ε is an algebraic difference between said first and second lateral misalignments (OTE) and dist is a distance between said first and second 2D images.

When the 3D sensor is arranged perfectly superimposed on the vehicle axis, the vertical centerline drown in the two-dimensional map is also the central vertical line of the 2D image, otherwise a fixed deviation is provided which can be taken into account in a known way.

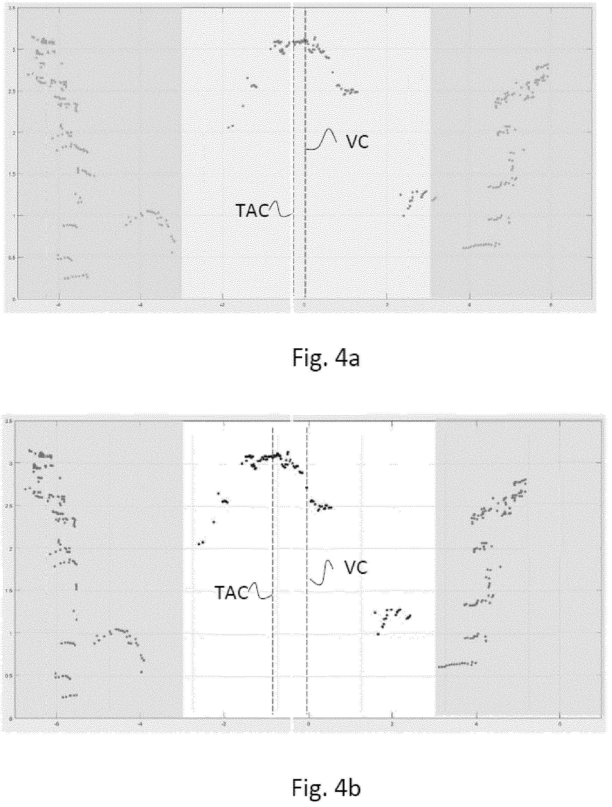

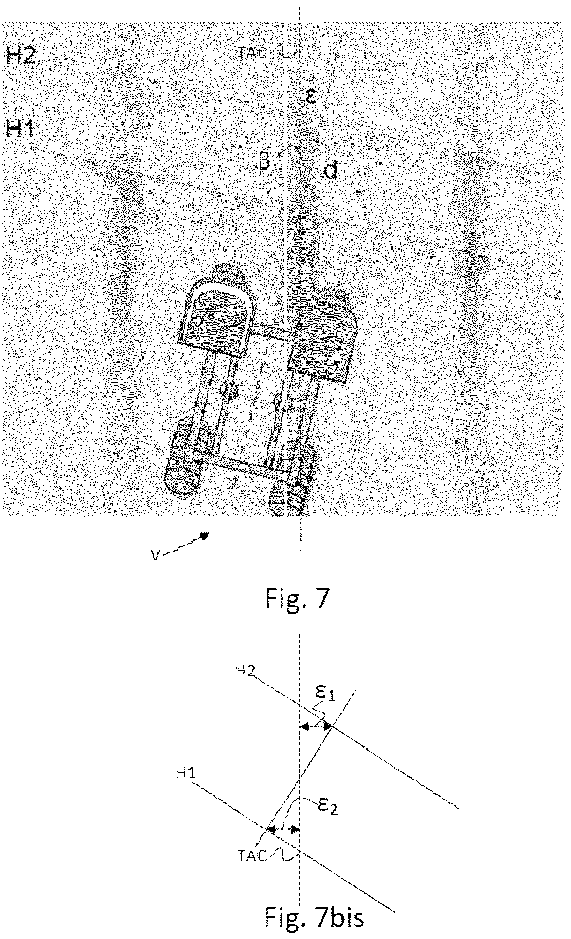

To simplify the understanding of the procedure, in figures 4a, 4b, 4c, 7, 7bis, the CT centerline of the plant alignment is traced, passing through the corresponding PK1 peak.

Figure 4a shows an ideal condition in which the plant is fairly centered with respect to the vehicle centerline; figure 4b shows a situation in which the plant is very far to the left with respect to the vehicle centerline; figure 4c shows the complete absence of the plant with the points concentrated in a lower part of the window to indicate the lack of the plant and the presence of weeds.

It is assumed that the driver of the vehicle contributes with a preliminary alignment of the vehicle with the row to be worked and therefore the autonomous driving system is able to identify the appropriate trajectory to follow in the field.

According to a first example of fallback procedure F1, it is envisaged to calculate a straight line interpolating the last positions of the vehicle acquired by the GPS system. This interpolating line is assumed as the trajectory to follow until it is again possible to recognize a plant in a 2D image, or until a timeout, as described above.

According to a second fallback procedure F2, some of the latest lateral OTE and angular XTE misalignments are considered and the respective OTEm and XTEm averages are calculated, which are used to control the progress of the vehicle; this is possible in consideration of the fact that the vehicle moves very slowly; preferably, the averages are weighted, giving lower weight to values calculated further back in time.

It is clear that the latest GPS positions or misalignments are acquired while the vehicle moves along a trajectory calculated on the basis of the recognition of plants in the various 2D images that are iteratively acquired during the vehicle's advancement.

The verification (Step 2) about the presence of a plant in the central region can be performed using at least one of the following procedures:
- According to a verification procedure, the points present in the central region are counted, the number of such points must exceed a predetermined threshold; in case the number of points exceeds this threshold, the verification is positive, vice versa, as described above, the window enlargement of the central region is carried out;
- According to another verification procedure that the barycenter point of the points in the central region is above a predetermined ordinate (height). This procedure allows to filter out weeds.

Preferably, the above procedures are both used in step 2.

It is clear that all the realizations can be implemented in the same autonomous driving system and selected autonomously based on the available data.

The 3D imaging system is pre-calibrated to determine the FOV (field of view) and the actual measured distance on the ground, facing down at an angle of, for example, 25° tilt.

Preferably the fit is considered acceptable when a fit index (goodness of fit, G.O.F.) exceeds a predetermined threshold, e.g., 0.8.

According to the present description, the peaks PK1, PK2... are the maxima of the respective fitting curve in the ordinate axis of the point cloud as clearly illustrated in Figures 4 - 6.

As described in the summary of the invention, a GPS positioning system can be used alternatively or in combination with the side view to cope with situations in which some trees are absent, because they are dead or just replaced, in the row to be worked.

According to Figures 7 and 7bis it is clear that the present invention is implemented for two layers H1 and H2. While in Figure 7, the first misalignment error (on H1) is zero and the second misalignment error (on H2) is ε, in Figure 7bis there are two errors ε1, ε2.

The angle of misalignment β can be calculated as arctan (ε/dist) where ε is the algebraic difference of the lateral misalignments OTE and dist is the distance between the slices H1 and H2.

For example, in Figure 7 the first offset is zero and the second is ε, so the calculation is immediate.

According to figure 7bis, the situation should be reported on that of figure 7, so ε = (ε1 - (-ε2)) = ε1 + ε2. On the other hand, when both errors are positive, because there is a strong right lateral misalignment ε = (ε1 - (+ ε2)) = ε1 - ε2.

It is possible to arrange two (or more) 3D sensors to obtain more point clouds in order to calculate the misalignment values between the vehicle axis VC and the TAC center line of the crop row in two successive horizontal positions H1, H2 such as shown in Figure 7.

It should be understood that when the vehicle is pre-aligned with a machined row, the XTE angular misalignment is corrected automatically by the recursive correction of the OTE lateral misalignment.

The direction of travel of the vehicle can be adjusted both from
- subsequent output of image/point cloud processing and
- monitoring of the estimated heading angle on the basis of the vehicle positions acquired by the GPS,
such as to provide feedback of the actual steering that the vehicle has performed (assuming that the GPS antenna is positioned correctly, i.e. on the vehicle axis). Preferably, the GPS axis coincides with the axis of the agricultural vehicle.

The GPS antenna provides both the coordinates (Latitude, Longitude) and the azimuth angle, which is the angle with respect to magnetic north, and the ground speed, inertial parameters (yaw, pitch, roll).

Preferably, the 3D sensor has a large field of view (FOV) to include at least the central row and the two side rows within the image.

The present invention can be advantageously carried out by means of a computer program which comprises coding means for carrying out one or more steps of the method, when this program is executed on a computer. Therefore, it is intended that the scope of protection extends to said computer program and further to computer readable means comprising a recorded message, said computer readable means comprising program coding means for carrying out one or more steps of the method. , when said program is run on a computer. Implementation variants of the described non-limiting example are possible, without however departing from the scope of the claims.

From the above description, the person skilled in the art is able to realize the object of the invention without introducing further construction details.

## Claims

1. A method for identifying a trajectory superimposed on a centerline (TAC) of an alignment of plants of a plantation to be worked, in particular orange groves, vines, coffee, hazelnuts and similar row crops, the method comprising the following steps:
- (Step B) acquisition of a 2D image obtained by means of a cross-section to a longitudinal development axis of the vehicle of a cloud of points acquired with a 3D sensor in an area in front of the vehicle, at a first predetermined distance (H1) from the front portion of the vehicle e
- (Step 1) windowing of a central region of the 2D image,
- (Step 2) checking for the presence of a plant in the central region, if the plant is not recognized (2 = no), then
- (Step 3) checking for the dimensions of the central region, if these do not exceed a predetermined threshold ratio with respect to the overall 2D image (3 = no), then
- (Step 4) enlarge the central region and return to step 1, otherwise (3 = yes)
or (Step 5) performing a fallback procedure;
If instead the checking (Step 2) about the presence of a plant in the central region is positive (2 = yes) then (Step 8) execution of a trajectory calculation procedure based on the recognition of a plant in the central region of the 2D image;
the method is **characterized in that** . itfurther comprises a step (Step 10) of controlling the autonomous driving system on the basis of said trajectory to be followed
and wherein after (Step 8) the execution of the trajectory calculation procedure based on the recognition of a plant, the further comprising method (Step 9) verifies that the lateral and/or angular misalignment calculated is lower than a predetermined threshold, in the positive case (9 = yes) the autonomous driving system control is performed (step 10) on the basis of said trajectory to be followed, otherwise (9 = no) it returns to said checking (step 3) about the size of the central region,
and wherein said calculation procedure (Step 8) of the trajectory to be followed based on the recognition of a plant in the 2D image comprises (8.1) identification of a first peak (PK1) associated with said pseudo-elliptic curve interpolating on a first 2D image at a first distance (H1) and calculation of a first lateral misalignment (OTE) between said first peak (PK1) and a vertical line of the two-dimensional map corresponding to the vehicle centerline (VC),
and wherein said calculation procedure (Step 8) of the trajectory to be followed based on the recognition of a plant in the 2D image further comprises (8.2) identification of a second peak (PK2) associated with a second pseudo - elliptical curve interpolating points of the central region of a second 2D image at a second distance (H2) and calculation of a second lateral misalignment of the second peak (PK2) with respect to said vertical line of the two-dimensional map (VC) and calculation of an angular misalignment ( XTE) as arctan (ε / dist) where ε is an algebraic difference between said first and second lateral misalignments (OTE) and dist is a distance between said first and second 2D images.

2. Method according to claim 1 wherein when the verification (Step 2) about the presence of a plant in the central region is positive (2 = yes) the method further comprises the following steps:
- (Step 6) fitting of the points in the central region with a pseudo-ellipsoid,
- (Step 7) verification of the goodness of the fitting, if a quality index of the fitting is higher than a predetermined threshold (7 = yes), the procedure for calculating the trajectory based on the recognition of a plant in the central region is performed (step 8) of the 2D image, otherwise you go back to this check (step 3) about the size of the central region.

3. Method according to any one of the preceding claims, further comprising the preliminary step (Step A) of acquiring a cloud of 3D points from said 3D sensor corresponding to the reflections detected by said 3D sensor (3DS) from a scenario in front of the vehicle (V ).

4. Method according to any one of the preceding claims, wherein said fallback procedure includes:
- (F1) sampling of the last positions of the vehicle obtained by means of a GPS positioning system and calculation of an interpolating line defining said trajectory to follow and / or
- (F2) sampling of the last lateral OTE and / or XTE angular misalignments and calculation of a respective average (OTEm, XTEm) defining said trajectory to follow.

5. Method according to any one of the preceding claims, wherein said step (Step 2) for verifying the presence of a plant in the central region comprises
- counting of the points contained in the central region and if a number of them is lower than a predetermined threshold value and/or
- a barycentre of said points is lower than a predetermined ordinate,
it is considered that in the central region a plant is not recognized, vice versa, it is considered that a plant is recognized in the central region.

6. Method according to any one of the preceding claims, wherein the execution of said steps is recursive.

7. Computer program comprising program coding means for carrying out all the steps (A, B, 1 - 10) of any one of claims 1 to 10, when said program is executed on a computer.

8. Computer readable means comprising a recorded program, said computer readable means comprising program coding means suitable for carrying out all steps (A, B, 1 - 10) according to any one of claims 1 to 7, when said program is run on a computer.

9. Autonomous driving system comprising a 3D sensor and processing means operatively connected to said 3D sensor, wherein said processing means are configured to control a vehicle propulsion, braking and steering system, in which said processing means are configured to perform all the steps of any one of claims 1 to 7.

10. Agricultural vehicle comprising a propulsion, braking and steering system and further comprising an autonomous driving system according to claim 9.

## Patentansprüche

1. Verfahren zur Identifizierung einer Trajektorie, die auf eine Mittellinie (TAG) einer Ausrichtung von Pflanzen einer zu bearbeitenden Plantage überlagert ist, insbesondere Orangenhaine, Weinreben, Kaffee, Haselnüsse und ähnliche Reihenkulturen, wobei das Verfahren die folgenden Schritte umfasst:
- (Schritt B) Erfassung eines 2D-Bildes, das mittels eines Querschnitts zu einer Längsentwicklungsachse des Fahrzeugs einer Punktwolke erhalten wird, die mit einem 3D-Sensor in einem Bereich vor dem Fahrzeug in einer ersten vorbestimmten Entfernung (H1) von dem vorderen Abschnitt des Fahrzeugs e erfasst wird
- (Schritt 1) Fensterung einer zentralen Region des 2D-Bildes,
- (Schritt 2) Überprüfung auf das Vorhandensein einer Pflanze in der zentralen Region, falls die Pflanze nicht erkannt wird (2 = nein), dann
- (Schritt 3) Überprüfung der Abmessungen der zentralen Region, falls diese ein vorbestimmtes Schwellwertverhältnis bezüglich des gesamten 2D-Bildes nicht überschreiten (3 = nein), dann
- (Schritt 4) die zentrale Region vergrößern und zu Schritt 1 zurückkehren, andernfalls (3 = ja)
oder (Schritt 5) Durchführen eines Ausweichverfahrens;
Wenn stattdessen die Überprüfung (Schritt 2) bezüglich des Vorhandenseins einer Pflanze in der zentralen Region positiv ist (2 = ja), dann (Schritt 8) Ausführung eines Trajektorienberechnungsverfahrens basierend auf der Erkennung einer Pflanze in der zentralen Region des 2D-Bildes;
das Verfahren ist **dadurch gekennzeichnet, dass** es ferner einen Schritt (Schritt 10) zur Steuerung des autonomen Fahrsystems auf der Grundlage der zu verfolgenden Trajektorie umfasst
und wobei nach (Schritt 8) der Ausführung des Trajektorienberechnungsverfahrens basierend auf der Erkennung einer Pflanze, das weitere umfassende Verfahren (Schritt 9) verifiziert, dass der berechnete Lateral- und/oder Winkelversatz niedriger als ein vorbestimmter Schwellenwert ist, im positiven Fall (9 = ja) die Steuerung des autonomen Fahrsystems (Schritt 10) auf der Grundlage der zu verfolgenden Trajektorie durchgeführt wird, andernfalls (9 = nein) zu der Überprüfung (Schritt 3) bezüglich der Größe der zentralen Region zurückkehrt,
und wobei das Berechnungsverfahren (Schritt 8) der zu verfolgenden Trajektorie basierend auf der Erkennung einer Pflanze in dem 2D-Bild (8.1) die Identifikation eines ersten Peaks (PK1) umfasst, der mit der pseudo-elliptischen Kurve verknüpft ist, die auf einem ersten 2D-Bild in einer ersten Entfernung (HI) interpoliert, und die Berechnung eines ersten Lateralversatzes (OTE) zwischen dem ersten Peak (PK1) und einer vertikalen Linie der zweidimensionalen Karte, die der Fahrzeugmittellinie (VC) entspricht,
und wobei das Berechnungsverfahren (Schritt 8) der zu verfolgenden Trajektorie basierend auf der Erkennung einer Pflanze im 2D-Bild (8.2) ferner die Identifikation eines zweiten Peaks (PK2) umfasst, der mit einer zweiten pseudo-elliptischen Kurve verknüpft ist, die Punkte der zentralen Region eines zweiten 2D-Bildes in einer zweiten Entfernung (H2) interpoliert, und die Berechnung eines zweiten Lateralversatzes des zweiten Peaks (PK2) in Bezug auf die vertikale Linie der zweidimensionalen Karte (VC) und die Berechnung eines Winkelversatzes (XTE) als arctan (ε / dist), wobei ε eine algebraische Differenz zwischen den ersten und zweiten Lateralversätzen (OTE) ist und dist eine Entfernung zwischen den ersten und zweiten 2D-Bildern ist.

2. Verfahren nach Anspruch 1, wobei, wenn die Überprüfung (Schritt 2) bezüglich des Vorhandenseins einer Pflanze in der zentralen Region positiv ist (2 = ja), das Verfahren ferner die folgenden Schritte umfasst:
- (Schritt 6) Anpassung der Punkte in der zentralen Region mit einem Pseudo-Ellipsoid,
- (Schritt 7) Verifikation der Güte der Anpassung, wenn ein Qualitätsindex der Anpassung höher als ein vorbestimmter Schwellenwert ist (7 = ja), wird das Verfahren zur Berechnung der Trajektorie basierend auf der Erkennung einer Pflanze in der zentralen Region (Schritt 8) des 2D-Bildes durchgeführt, andernfalls kehrt man zu dieser Überprüfung (Schritt 3) bezüglich der Größe der zentralen Region zurück.

3. Verfahren nach einem der vorhergehenden Ansprüche, ferner umfassend den vorläufigen Schritt (Schritt A) des Erfassens einer Wolke von 3D-Punkten von dem 3D-Sensor entsprechend den von dem 3D-Sensor (3DS) detektierten Reflexionen aus einem Szenario vor dem Fahrzeug (V).

4. Verfahren nach einem der vorhergehenden Ansprüche, wobei das Ausweichverfahren einschließt:
- (F1) Abtastung der letzten Positionen des Fahrzeugs, die mittels eines GPS-Positionierungssystems erhalten wurden, und Berechnung einer Interpolationslinie, die die zu verfolgende Trajektorie definiert, und/oder
- (F2) Abtastung der letzten Lateral- OTE- und/oder XTE-Winkelversätze und Berechnung eines jeweiligen Mittelwerts (OTEm, XTEm), der die zu verfolgende Trajektorie definiert.

5. Verfahren nach einem der vorhergehenden Ansprüche, wobei der Schritt (Schritt 2) zur Überprüfung auf das Vorhandensein einer Pflanze in der zentralen Region umfasst
- Zählen der in der zentralen Region enthaltenen Punkte und wenn eine Anzahl davon niedriger als ein vorbestimmter Schwellenwert ist und/oder
- ein Schwerpunkt der Punkte niedriger als eine vorbestimmte Ordinate ist,
wird davon ausgegangen, dass in der zentralen Region eine Pflanze nicht erkannt wird, umgekehrt wird davon ausgegangen, dass eine Pflanze in der zentralen Region erkannt wird.

6. Verfahren nach einem der vorhergehenden Ansprüche, wobei die Ausführung der Schritte rekursiv ist.

7. Computerprogramm, umfassend Programmcodiermittel zur Durchführung aller Schritte (A, B, 1 - 10) nach einem der Ansprüche 1 bis 10, wenn das Programm auf einem Computer ausgeführt wird.

8. Computerlesbare Mittel, die ein aufgezeichnetes Programm umfassen, wobei die computerlesbaren Mittel Programmcodiermittel umfassen, die geeignet sind, alle Schritte (A, B, 1 - 10) nach einem der Ansprüche 1 bis 7 auszuführen, wenn das Programm auf einem Computer ausgeführt wird.

9. Autonomes Fahrsystem, umfassend einen 3D-Sensor und Verarbeitungsmittel, die funktionsfähig mit dem 3D-Sensor verbunden sind, wobei die Verarbeitungsmittel konfiguriert sind, um ein Fahrzeugantriebssystem, Bremssystem und Lenksystem zu steuern, wobei die Verarbeitungsmittel konfiguriert sind, um alle Schritte nach einem der Ansprüche 1 bis 7 durchzuführen.

10. Landwirtschaftliches Fahrzeug, umfassend ein Antriebs-, Brems- und Lenksystem und ferner umfassend ein autonomes Fahrsystem nach Anspruch 9.

## Revendications

1. Procédé d'identification d'une trajectoire superposée à une ligne médiane (TAG) d'un alignement de plantes d'une plantation à travailler, en particulier orangers, vignes, caféiers, noisettes et cultures en rangs similaires, le procédé comprenant les étapes suivantes :
- (étape B) acquisition d'une image 2D obtenue au moyen d'une coupe transversale à un axe de développement longitudinal du véhicule d'un nuage de points acquis avec un capteur 3D dans une zone devant le véhicule, à une première distance prédéterminée (H1) de la partie avant du véhicule e
- (étape 1) fenêtrage d'une région centrale de l'image 2D,
- (étape 2) vérification de la présence d'une plante dans la région centrale, si la plante n'est pas reconnue (2 = non), alors
- (étape 3) vérification des dimensions de la région centrale, si celles-ci ne dépassent pas un rapport seuil prédéterminé par rapport à l'image 2D globale (3 = non), alors
- (étape 4) agrandissement de la région centrale et retour à l'étape 1, sinon (3 = oui)
ou (étape 5) mise en œuvre d'une procédure de repli ;
si, au contraire, la vérification (étape 2) de la présence d'une plante dans la région centrale est positive (2 = oui) alors (étape 8) exécution d'une procédure de calcul de trajectoire basée sur la reconnaissance d'une plante dans la région centrale de l'image 2D ;
le procédé est **caractérisé en ce qu'il** comprend en outre une étape (étape 10) consistant à commander le système de conduite autonome sur la base de ladite trajectoire à suivre
et dans lequel, après (étape 8) l'exécution de la procédure de calcul de trajectoire basée sur la reconnaissance d'une plante, le procédé comprenant en outre (étape 9) vérifie que le désalignement latéral et/ou angulaire calculé est inférieur à un seuil prédéterminé, dans le cas positif (9 = oui) la commande de système de conduite autonome est effectuée (étape 10) sur la base de ladite trajectoire à suivre, sinon (9 = non) il revient à ladite vérification (étape 3) de la taille de la région centrale,
et dans lequel ladite procédure de calcul (étape 8) de la trajectoire à suivre en fonction de la reconnaissance d'une plante dans l'image 2D comprend (8.1) l'identification d'un premier pic (PK1) associé à ladite courbe pseudo-elliptique interpolant sur une première image 2D à une première distance (H1) et le calcul d'un premier désalignement latéral (OTE) entre ledit premier pic (PK1) et une ligne verticale de la carte bidimensionnelle correspondant à la ligne médiane du véhicule (VC),
et dans lequel ladite procédure de calcul (étape 8) de la trajectoire à suivre sur la base de la reconnaissance d'une plante dans l'image 2D comprend en outre (8.2) l'identification d'un deuxième pic (PK2) associé à une deuxième courbe pseudo-elliptique interpolant des points de la région centrale d'une seconde image 2D à une deuxième distance (H2) et le calcul d'un deuxième désalignement latéral du deuxième pic (PK2) par rapport à ladite ligne verticale de la carte bidimensionnelle (VC) et le calcul d'un désalignement angulaire (XTE) en tant qu'arctan (ε / dist) où ε est une différence algébrique entre lesdits premier et second désalignements latéraux (OTE) et dist est une distance entre lesdites première et seconde images 2D.

2. Procédé selon la revendication 1, dans lequel lorsque la vérification (étape 2) concernant la présence d'une plante dans la région centrale est positive (2 = oui) le procédé comprend en outre les étapes suivantes :
- (étape 6) ajustement des points de la région centrale avec un pseudoellipsoïde,
- (étape 7) vérification de la qualité de l'ajustement, si un indice de qualité de l'ajustement est supérieur à un seuil prédéterminé (7 = oui), la procédure de calcul de la trajectoire sur la base de la reconnaissance d'une plante dans la région centrale est effectuée (étape 8) de l'image 2D, sinon vous revenez à cette vérification (étape 3) de la taille de la région centrale.

3. Procédé selon l'une quelconque des revendications précédentes, comprenant en outre l'étape préliminaire (étape A) d'acquisition d'un nuage de points 3D à partir dudit capteur 3D correspondant aux réflexions détectées par ledit capteur 3D (3DS) à partir d'un scénario devant le véhicule (V).

4. Procédé selon l'une quelconque des revendications précédentes, dans lequel ladite procédure de repli comporte :
- (F1) échantillonnage des dernières positions du véhicule obtenues au moyen d'un système de positionnement GPS et calcul d'une ligne d'interpolation définissant ladite trajectoire à suivre et/ou
- (F2) échantillonnage des derniers désalignements angulaires latéraux OTE et/ou XTE et calcul d'une moyenne respective (OTEm, XTEm) définissant ladite trajectoire à suivre.

5. Procédé selon l'une quelconque des revendications précédentes, dans lequel ladite étape (étape 2) de vérification de la présence d'une plante dans la région centrale comprend
- le comptage des points contenus dans la région centrale et si un nombre d'entre eux est inférieur à une valeur seuil prédéterminée et/ou
- un barycentre desdits points est inférieur à une ordonnée prédéterminée,
on considère que dans la région centrale une plante n'est pas reconnue, vice versa, on considère qu'une plante est reconnue dans la région centrale.

6. Procédé selon l'une quelconque des revendications précédentes, dans lequel l'exécution desdites étapes est récursive.

7. Programme informatique comprenant un moyen de codage de programme permettant d'effectuer toutes les étapes (A, B, 1 - 10) selon l'une quelconque des revendications 1 à 10, lorsque ledit programme est exécuté sur un ordinateur.

8. Moyen lisible par ordinateur comprenant un programme enregistré, ledit moyen lisible par ordinateur comprenant un moyen de codage de programme approprié pour effectuer toutes les étapes (A, B, 1 - 10) selon l'une quelconque des revendications 1 à 7, lorsque ledit programme est exécuté sur un ordinateur.

9. Système de conduite autonome comprenant un capteur 3D et un moyen de traitement connecté de manière fonctionnelle audit capteur 3D, dans lequel ledit moyen de traitement est configuré pour commander un système de propulsion, de freinage et de direction de véhicule, dans lequel ledit moyen de traitement est configuré pour effectuer toutes les étapes selon l'une quelconque des revendications 1 à 7.

10. Véhicule agricole comprenant un système de propulsion, de freinage et de direction et comprenant en outre un système de conduite autonome selon la revendication 9.
